# EUROPÄISCHE PATENTSCHRIFT

(11) **EP 2 399 453 B1**
(45) Veröffentlichungstag und Bekanntmachung des Hinweises auf die Patenterteilung: **16.01.2013**
(21) Anmeldenummer: 11004219.9
(22) Anmeldetag: 21.05.2011
(51) Int. Cl.: A01K 1/00

(54) **Tierunterkunft, insbesondere Kälberiglu für ein Kalb**
Animal housing, in particular calf hutch for a calf
Abri pour animaux, notamment igloo à veaux pour un veau

(30) Priorität: 25.06.2010 DE 102010024773
(43) Veröffentlichungstag der Anmeldung: 28.12.2011
(73) Patentinhaber: Suevia Haiges GmbH, 74366 Kirchheim/Neckar (DE)
(72) Erfinder: Wagner, Gilles, 9175 Niederfeulen (LU)
(74) Vertreter: Bartels & Partner

(56) Entgegenhaltungen:
- EP-A2- 1 486 113
- GB-A- 369 225
- US-A- 5 218 925
- US-B1- 6 691 644

## Beschreibung

Die Erfindung betrifft eine Tierunterkunft, insbesondere ein Kälberiglu für ein Kalb, umfassend eine auf einen Boden aufstellbare, Decken- und Wandteile und zumindest eine Zugangsöffnung aufweisende Box und in eine Auszugsrichtung und in eine Einzugsrichtung zwischen einer Auszugsstellung und einer Einzugsstellung bewegbare, in der Auszugsstellung einen an die Zugangsöffnung angrenzenden Auslauf definierende Umrandungsmittel, wobei an der Box zumindest eine im Wesentlichen parallel zur Auszugs- bzw. Einzugsrichtung gerichtete Führungsschiene für die Umrandungsmittel vorgesehen ist.

Derartige Tierunterkünfte finden Verwendung bei der Außenaufzucht von Tieren, wie Kälber. Die Wahl der Aufzuchtmethode ist wichtig für den Ertrag und die Gesundheit einer Vieherde. Eine gesunde und hochproduktive Viehherde kann durch individuelle Außenaufzucht von Tieren erreicht werden. Beispielsweise ein Kalb wird ohne Abwehrstoffe geboren und ist nur durch die Verabreichung von Kuhmilch während der ersten Tage nach der Geburt in der Lage, diese aufzubauen. Durch Isolierung des Milchkalbs von möglichen Infektionsgefahren ist die Gefahr der Ansteckung minimal, bei einer Außenunterbringung in einer eigenen Tierunterkunft sind gegenseitige Infektionen ausgeschlossen. Die Box bietet einen Schutz gegen Wettereinflüsse wie Regen und Wind sowie gegen UV-Licht. Darüber hinaus stellen äußerst niedrige Außentemperaturen kein Problem für die Kälberaufzucht dar. Durch die Umrandungsmittel in der Auszugsstellung wird ein Auslauf für ein Kalb definiert, was eine größere Bewegungsfreiheit für das Kalb und seinen Zugang zu Frischluft und Tageslicht sicherstellt. Die Umrandungsmittel sind beispielsweise als Gitterwerk ausgebildet und vollständig verzinkt. Zur Befestigung von Futtertrögen weisen sie in der Regel sogenannte "Eimerringe" auf. Über ein Einstecksystem sind sie mit der Box verbunden.

Eine Tierunterkunft der eingangs genannten Art ist aus US 5,218,925 A bekannt. Bei der bekannten Tierunterkunft sind die zaunartigen Umrandungsmittel durch zwei seitliche horizontale Streben bzw. Träger und durch an den jeweiligen Ecken bzw. Enden angeordnete vertikale Stützen verstärkt und in ihrer Form stabilisiert. Die der Box zugeordneten vertikalen Stützen der Umrandungsmittel sind jeweils in einer Führungsschiene geführt, welche sich an der entsprechenden Außenseite der Box in horizontaler Richtung erstreckt.

Eine weitere Tierunterkunft ist aus US 6,691,644 B1 bekannt. Bei dieser Tierunterkunft sind die zaunartigen Umrandungsmittel in U-förmigen, die Box an Seiten- und Deckelteilen umgebenden Führungsteilen, genauer in an diesen seitlich ausgebildeten, vertikal angeordneten Führungsschlitzen geführt. In der Einzugsstellung liegt das hintere Ende der bodenseitigen Abschlussleiste der Umrandungsmittel auf einem an der Box befestigten Trägerteil auf. Dieses Trägerteil in Form eines Hakens ist vom U-förmigen Führungsteil beabstandet, wobei dieser Abstand dem Weg zwischen Ausgangsstellung und Einzugsstellung der Umrandungsmittel entspricht.

Eine weitere Tierunterkunft ist aus EP 1 486 113 A2 bekannt geworden. Die bekannte Tierunterkunft weist als Zaun ausgebildete Umrandungsmittel auf, wobei der Zaun längs der Seiten der Box verlagert werden kann. Die Unterseite der Box ist mit einem nach außen gerichteten Flansch versehen, so dass die Box auf sichere und zugluftfreie Weise auf dem Boden steht. Der Zaun kann über den Flansch aus der Auszugsstellung in die Einzugsstellung geschoben werden, so dass die Last an einer entsprechenden Führungsschiene gering sein kann. Die Führungsschiene ist an einer jeweiligen Seitenwand der Box vorgesehen und in ihr ist jeweils ein oberes freies Ende des Zauns mit Hilfe eines Bolzens befestigt. Alternativ kann der Zaun an der Box schwenkbar befestigt sein, wobei der Befestigungspunkt sich in der Nähe der unteren Seite der Box und des Zauns befindet.

Ausgehend von diesem Stand der Technik stellt sich die Erfindung die Aufgabe, mit einer einfachen Konstruktion eine Verfahrbarkeit der Tierunterkunft dahingehend sicherzustellen, dass insbesondere die Tierunterkunft und ein darin befindliches Tier in einfacher Weise um einen geringen Weg versetzt werden können.

Die Aufgabe wird erfindungsgemäß gelöst durch eine Tierunterkunft mit den Merkmalen des Patentanspruchs 1 in seiner Gesamtheit. Eine erfindungsgemäße Tierunterkunft zeichnet sich dadurch aus, dass an dem in der Auszugsstellung von der Box beabstandeten Ende der Umrandungsmittel mindestens ein um eine Radachse drehbares Rad derart angeordnet ist, dass die Tierunterkunft sowohl in der Auszugsstellung als auch in der Einzugsstellung um die Radachse kippbar und entlang einer Rollrichtung verfahrbar ist.

Gemäß der Erfindung ist an der Tierunterkunft zumindest ein Rad vorgesehen. Das zumindest eine Rad ermöglicht ein Verfahren der Tierunterkunft, insbesondere mit in der Einzugsstellung befindlichen Umrandungsmitteln. Erfindungsgemäß ist das zumindest eine Rad an den Umrandungsmitteln vorgesehen. Hieraus ergibt sich eine besonders leichte Bedien- und Verfahrbarkeit der Tierunterkunft. Weiter ergibt sich der Vorteil, dass eine Radführung bzw. -halterung an der typischerweise aus einem Kunststoff gefertigten Box entfällt. Zweckmäßigerweise sind mehrere, bevorzugterweise zwei, Räder an einer gemeinsamen Radachse befestigt. Dies ist eine äußerst einfache Art einer Räderanordnung. Das zumindest eine Rad kann einen Reifen, insbesondere aus einem Gummimaterial, aufweisen.

Durch die zumindest eine im Wesentlichen parallel zur Auszugs- bzw. Einzugsrichtung gerichtete Führungsschiene wird eine Lagestabilisierung und problemlose Verfahrbarkeit der Umrandungsmittel in jeder Stellung zwischen Einzugsstellung und Auszugsstellung sichergestellt. Vorteilhafterweise ist die zumindest eine Führungsschiene an zumindest einem Seitenwandteil der Box angeordnet. Zweckmäßigerweise entspricht die Länge der Führungsschiene dem maximalen Auszug der Umrandungsmittel, mit anderen Worten dem Weg zwischen Einzugs- und Auszugsstellung.

Ein vorderes, den Umrandungsmitteln zugeordnetes Ende der Führungsschiene kann als Schwenkpunkt für die Umrandungsmittel beim Anheben derselben dienen. Weiter ist es vorstellbar, dass die Umrandungsmittel um den Schwenk- bzw. Drehpunkt aus der Ein- oder Auszugsstellung in eine im Wesentlichen vertikale Stellung geschwenkt bzw. aufgestellt werden können. Durch die Ausbildung und die Art der Führungs- und /oder Fixierungsmittel werden mögliche Bewegungsrichtungen und Bewegungsabläufe der Umrandungsmittel, insbesondere zwischen Auszugs- und Einzugsstellung, festgelegt. Vorteilhafterweise verschließen die Umrandungsmittel in der Einzugsstellung zumindest teilweise die Zugangsöffnung.

Weiter ist es vorteilhaft, wenn die Führungsmittel eine Kulissenführung umfassen. Hieraus ergibt sich der Vorteil einer besonders sicheren, leicht zu bedienenden Bewegung und Führung der Umrandungsmittel. Die Box ist typischerweise als Kunststoffteil ausgebildet, insbesondere als Formteil, in dessen Seitenwandteil die Führungsschiene(n) einstückig ausgebildet sind und/oder bei Ausbildung bzw. Herstellung der Box in diese eingebracht, beispielsweise umgossen, werden.

Entlang der jeweiligen Führungsschiene ist vorteilhafterweise zumindest ein bodenseitiges Abschlusselement der Umrandungsmittel geführt. Eine bodenseitige Führung und Fixierung der Umrandungsmittel an der Box stellt neben einer Bewegungssicherheit, d. h., einer sicheren Führung und Befestigung, eine große Bewegungsfreiheit und eine hohe Bediensicherheit der Umrandungsmittel sicher. Das zumindest eine Rad ist hierbei an einem dem Auslauf zugeordneten Ende der Führungs- und/oder Fixierungsmittel für das zumindest eine bodenseitige Abschlusselement der Umrandungsmittel an der Box vorgesehen.

Weiter ist es vorteilhaft, das zumindest eine Rad fluchtend mit dem zumindest einen bodenseitigen Abschlusselement und/oder einer Führungsschiene anzuordnen. Hieraus ergibt sich eine kompakte Bauweise der erfindungsgemäßen Tierunterkunft. Somit können die Umrandungsmittel mit geringem Krafteinsatz zwischen Auszugs- und Einzugsstellung bewegt werden. Das zumindest eine Rad kann jedoch auch außerhalb einer Fluchtlinie angeordnet sein. Dies bietet sich insbesondere für Räder mit großem Durchmesser an.

Bei einer weiteren bevorzugten Ausführungsform der erfindungsgemäßen Tierunterkunft ist an der Box und/oder an der zumindest einen mit der Box verbundenen Führungsschiene zumindest eine von einem bodenseitigen Abschlusselement durchgreifbare bzw. durchgriffene und/oder mit diesem verbindbare bzw. verbundene Öse angeordnet. Zweckmäßigerweise ist die zumindest eine Öse ortsfest an der Box oder an der mit der Box in Verbindung stehenden Führungsschiene befestigt. Hierbei kann mit minimalem konstruktivem Aufwand eine Führung und Fixierung für die Umrandungsmittel an der Box realisiert werden. Die Durchgriffsöffnung der Ösen ist auf den Außendurchmesser des bodenseitigen Abschlusselements angepasst im Hinblick auf ein möglichst geringes Spiel.

Beispielsweise können zwei, eine vordere, der Auszugsstellung zugeordnete und eine hintere, der Einzugsstellung zugeordnete Öse an der Box angeordnet sein. In der Einzugsstellung sind beide Ösen vom jeweiligen Abschlusselement durchgriffen; beim Führen der Umrandungsmittel in die Auszugsstellung wird das Abschlusselement aus der hinteren Öse und sein hinteres freies Ende zur vorderen Öse, zweckmäßigerweise jedoch nicht durch diese hindurch, geführt. Insbesondere kann am hinteren Ende der Umrandungsmittel ein die Durchgriffsöffnung der vorderen Öse überragender Anschlag vorgesehen sein. In der Auszugsstellung wird lediglich die vordere Öse durchgriffen. Beim Zurückführen der Umrandungsmittel in die Einzugsstellung wird das Abschlusselement, genauer dessen hinteres freies Ende, wieder durch die hintere Öse hindurchgeführt.

Öse im Sinne der Erfindung meint jedes im Wesentlichen ringförmige Element, welches das bodenseitige Abschlusselement zumindest an einem Umfangsabschnitt umgreift. So unterfällt auch ein halbkreisförmiges Element dem Begriff Öse. Eine fest mit den Umrandungsmitteln, genauer dem bodenseitigen Abschlusselement, fest verbundene Öse ist in der Führungsschiene geführt, wodurch ein sicheres Wechseln zwischen Einzugs- und Auszugsstellung gewährleistet wird. Durch die Verfahrbarkeit der zumindest einen Öse ist der maximale Auszug festgelegt.

Die Umrandungsmittel sind vorteilhafterweise zaun- und/oder käfigartig ausgebildet. Eine derartige Ausbildung der Umrandungsmittel führt zu einem leichten Gewicht und folglich zu einer guten Handhabbarkeit der Umrandungsmittel durch eine Bedienperson. Darüber hinaus können Frischluft und Futter zu einem in der Tierunterkunft gehaltenen Tier geführt und dieses beobachtet werden. Weiter kann an den Umrandungsmitteln eine separat zu öffnende Tür vorgesehen sein, so dass ein von den Umrandungsmittel umgebener Auslauf, beispielsweise für Reinigungs- und/oder Fütterungszwecke, zugänglich ist. Die zaun- und/oder käfigartigen Umrandungsmittel weisen boden- bzw. unterseitig zweckmäßigerweise eine Leiste auf, die mit einfachen Mitteln in Ösen und/oder Schienen geführt werden kann.

Weiter ist es vorteilhaft, wenn die Umrandungsmittel zur Ausbildung eines im Wesentlich rechteckförmigen Auslaufs U-förmig ausgebildet sind. Die Box weist zweckmäßigerweise ebenfalls einen rechteckförmigen Grundriss auf, so dass die Umrandungsmittel in der Einzugsstellung platzoptimiert, d.h. raumsparend, aufbewahrt sind. Die Umrandungsmittel können mehrteilig, beispielsweise zweiteilig, ausgebildet sein, wobei die Teile der Umrandungsmittel gemeinsam und/oder getrennt voneinander bewegbar sind. Eine gemeinsame Bewegung ist insbesondere dann von Vorteil, wenn bei Führung der Umrandungsmittel von der Auszugs- in die Einzugsstellung zugleich ein Tier zurück in die Box gedrängt werden soll. Eine Bewegung von Einzelteilen ist vorteilhaft hinsichtlich des zu bewegenden Gewichts und ermöglicht die Reparatur bzw. den Austausch von Einzelteilen.

Weitere Vorteile und Merkmale der Erfindung ergeben sich aus den Figuren und der nachfolgenden Beschreibung der Zeichnung. Die vorstehend genannten und die weiter aufgeführten Merkmale können erfindungsgemäß einzeln oder in beliebigen Kombinationen miteinander realisiert werden. Die in den Figuren gezeigten Merkmale sind rein schematisch und nicht maßstäblich zu verstehen. Es zeigt:
- Fig. 1: eine Seitenansicht eines Ausführungsbeispiels der erfindungsgemäßen Tierunterkunft mit Umrandungsmitteln in der Auszugsstellung;
- Fig. 2: die Tierunterkunft nach Fig. 1 mit Umrandungsmitteln in der Einzugsstellung;
- Fig. 3: eine Seitenansicht der in Fig. 2 gezeigten Tierunterkunft im angehobenen, rollbaren Zustand;
- Fig. 4: eine Seitenansicht der in den Fig. 2 und 3 gezeigten Tierunterkunft im aufgestellten Zustand; und
- Fig. 5: eine perspektivische Darstellung eines weiteren Ausführungsbeispiels der erfindungsgemäßen Tierunterkunft mit einer Bedienperson.

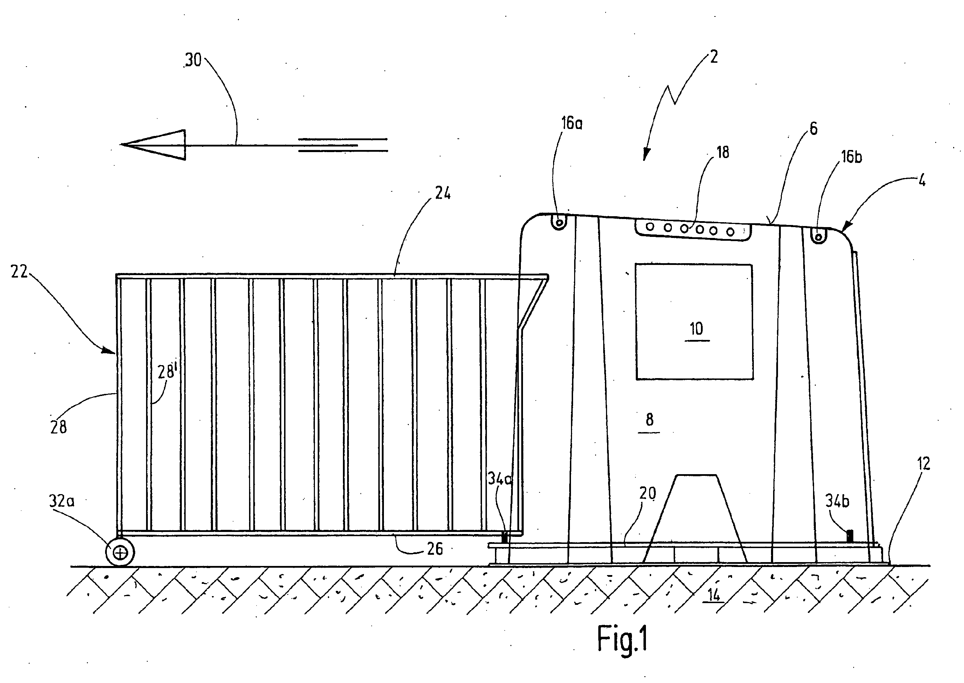

Fig. 1 zeigt eine als Kälberiglu ausgebildete Tierunterkunft 2 mit einer im Wesentlichen quaderförmigen Box 4. Die Box 4 ist aus einem UV-Licht reflektierenden, weißen Kunststoffmaterial gebildet und weist ein Deckenteil 6 und Seitenwandteile, von denen ein Seitenwandteil 8 gezeigt ist, auf.

Im Seitenwandteil 8 kann eine rechteckförmige Fensteröffnung 10 vorgesehen sein. An der dem Deckenteil 6 entgegengesetzten Unter- bzw. Bodenseite weist die Box 4 einen Abschlussrand 12 auf und liegt mit diesem zugluftdicht an einem Boden 14 an bzw. auf. Zum Aufstellen bzw. Bewegen der Tierunterkunft 2 sind an der Box 4, genauer an dem Deckenteil 6 der Box 4, Eingriffsösen 16a, 16b vorgesehen, welche beispielsweise von einem an einem Traktor vorgesehenen Kranhaken durchgriffen werden können. Am Deckenteil 6 ist weiter ein leistenartiges Verstärkungselement 18 aus Metall vorgesehen. An dem dem Boden 14 zugeordneten Randabschnitt des Seitenwandteils 8 ist eine Führungsschiene 20 in Form einer Metallstange angeordnet.

Entlang der Führungsschiene 20 geführt und auf diese Weise mit der Box 4 verbunden sind Umrandungsmittel 22, welche zaunartig ausgebildet sind und in der gezeigten Auszugsstellung einen Auslauf für ein in der Tierunterkunft 2 gehaltenes Tier festlegen, d. h., zumindest teilweise umranden. Die Umrandungsmittel 22 umfassen ein deckenseitiges Abschlusselement 24 und ein bodenseitiges Abschlusselement 26. Zwischen den leistenförmigen Abschlusselementen 24, 26 erstrecken sich Streben 28, 28' und bilden somit einen Zaun bzw. ein Gatter aus. Die Umrandungsmittel 22 sind in eine Auszugsrichtung 30 verfahren bzw. bewegt worden in die gezeigte Auszugsstellung. Diese Bewegung wird erleichtert durch ein an einem vorderen Ende bzw. einer Ecke der Umrandungsmittel 22 angeordnetes Rad 32a. Ein weiteres Rad 32b ist in den Fig. 1 bis 4 nicht gezeigt. Bei der Bewegung von der Einzugsstellung in die Auszugsstellung ist das bodenseitige Abschlusselement 26 in Ösen 34a, 34b, welche ortsfest an dem Seitenwandteil 8 der Box 4 angeordnet sind, geführt bzw. fixiert. In der Auszugsstellung sind die Umrandungsmittel 22 aus der hinteren Öse 34b geführt und lediglich durch die vordere Öse 34a gelagert.

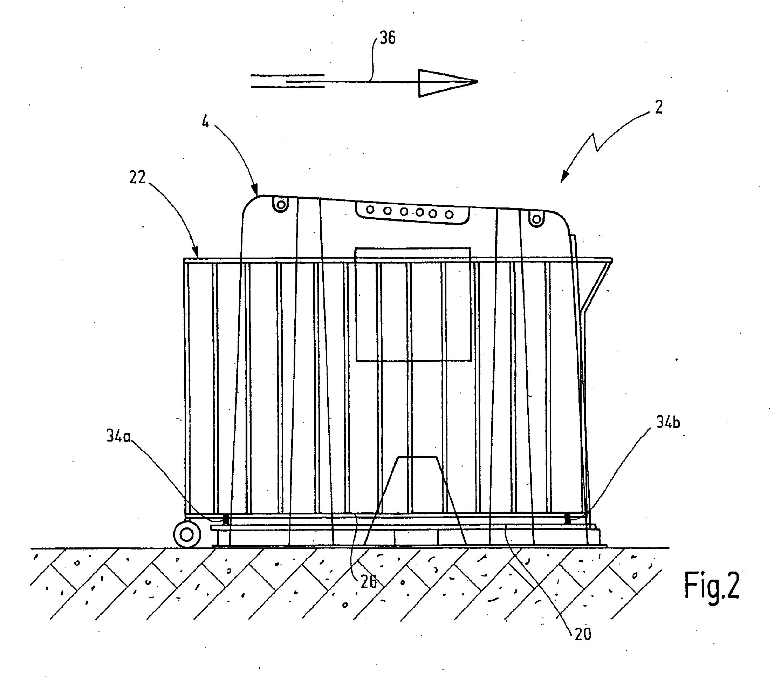

Die Darstellung von Fig. 2 unterscheidet sich von der Darstellung von Fig. 1 dadurch, dass die Umrandungsmittel 22 in eine Einzugsrichtung 36 in die gezeigte Einzugsstellung geführt worden sind. Bei dieser Bewegung ist das bodenseitige Abschlusselement 26 der Umrandungsmittel 22 in die hintere Öse 34b wieder eingeführt worden. In der Einzugsstellung ist das bodenseitige Abschlusselement 26 in beiden Ösen 34a, 34b gelagert und ortstabil gehalten. Alternativ zu den ortsfest an der Box vorgesehenen Ösen 34a, 34b können in der Schiene 20 verfahrbare Schlitten oder Ösen, die fest mit dem Abschlusselement 26 verbunden sind, vorgesehen sein. In Fig. 2 ist erkennbar, dass die Abmessungen der Umrandungsmittel 22 im Wesentlichen denen der Box 4 entsprechen, so dass die Tierunterkunft 2 in kompakter Weise bewegt und bei Nichtgebrauch platzsparend aufbewahrt werden kann.

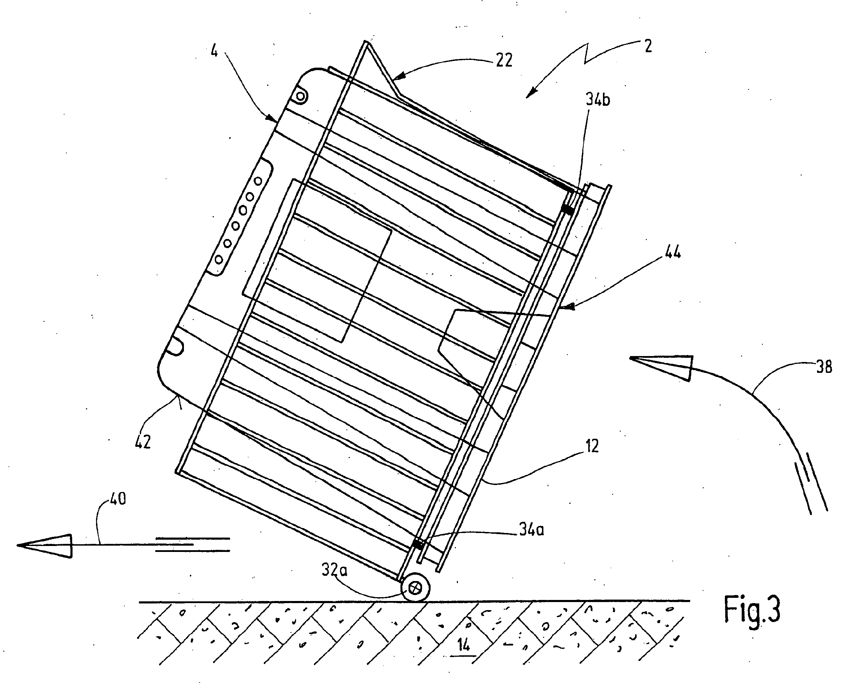

Fig. 3 zeigt, wie die in Fig. 2 dargestellte Tierunterkunft 2 in einer Schwenkbewegung 38 um die Drehachse des Rades 32a angehoben und in eine Rollrichtung 40 verfahren werden kann. Die Umrandungsmittel 22 mit dem daran befestigten Rad 32a dienen als Fahrvorrichtung für die Box 4. Eine an einem Vorderwandteil 42 der Box 4 vorgesehene Zugangsöffnung (in Fig. 3 nicht gezeigt) weist in Richtung eines vorderen, radseitigen Endes der Umrandungsmittel 22. Im aufgeschwenkten, angehobenen Zustand der Tierunterkunft 2 ist der Abschlussrand 12 der Box vom Boden 14 beabstandet und das Innere der Box 4 über eine Bodenöffnung 44 zugänglich. Eine zuvor von der Box 4 zugestellte Bodenfläche ist nunmehr insbesondere für Reinigungszwecke zugänglich ebenso wie das Innere der Box 4. Es versteht sich, dass auch die in Fig. 1 gezeigte Auszugsstellung der Tierunterkunft 2 bzw. der Umrandungsmittel 22 ein Anheben der Tierunterkunft 2 zur Verfahrung derselben ermöglicht. Dies ist insbesondere dann von Vorteil, wenn die Tierunterkunft 2 und ein darin befindliches Tier um einen geringen Weg versetzt werden sollen. Für einen kompletten Ortswechsel mit weiten Fahrwegen empfiehlt sich ein Einziehen der Umrandungsmittel 22 und eine Fahrbewegung in Rollrichtung 40, wobei kein Tier in der Box 4 verbleiben sollte.

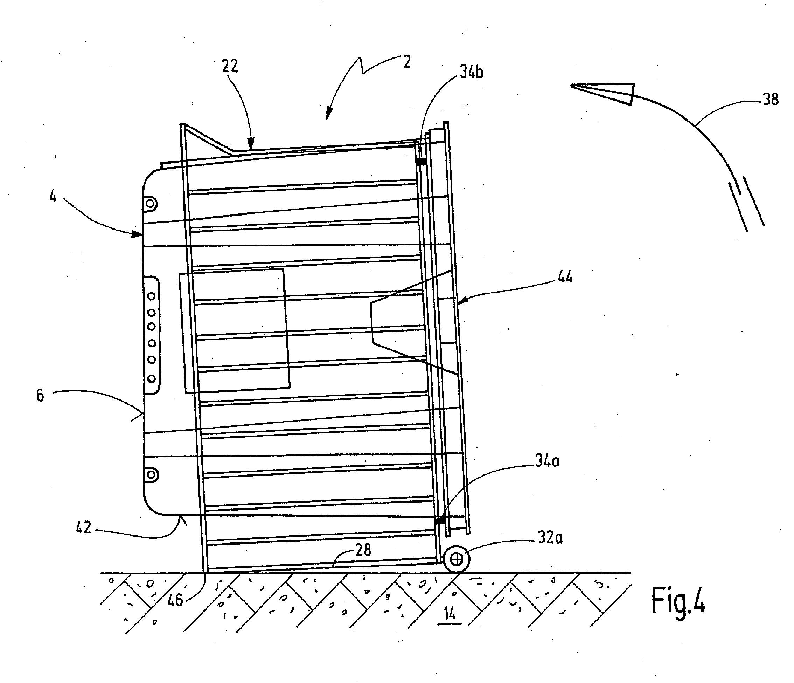

In Fig. 4 ist eine weitere Seitenansicht der Tierunterkunft 2 gezeigt, wobei diese eine maximale Schwenkbewegung 38 vollführt hat und in im Wesentlichen vertikaler Richtung auf dem Boden 14 aufsteht. Die Umrandungsmittel 22 befinden sich in der Einzugsstellung und liegen mit dem Rad 32a und einer vorderen Ecke 46, welche sich an die vordere Strebe 28 anschließt, auf dem Boden 14 an bzw. auf. Die Box 4 weist keinerlei Berührfläche mit dem Boden 14 auf und kann, da über die Bodenöffnung 44 zugänglich, vollständig, d. h., an sämtlichen Außen- und Innenflächen gereinigt werden. Anstelle des Abschlussrandes 12 weist das Vorderwandteil 42 zum Boden 14. In dem in Fig. 4 gezeigten aufgestellten Zustand kann die Tierunterkunft 2 raumsparend aufbewahrt werden.

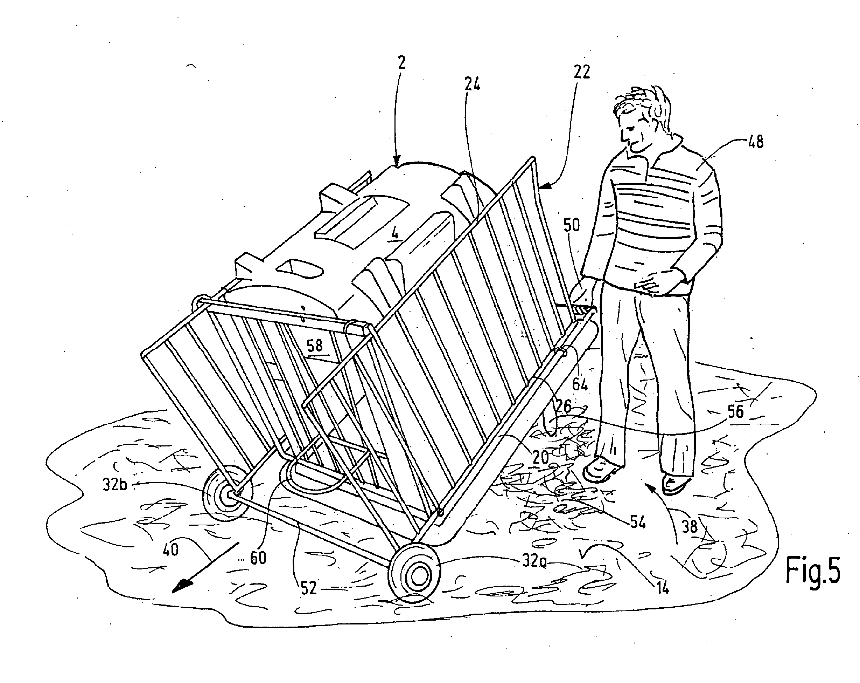

Fig. 5 zeigt in perspektivischer Darstellung eine Tierunterkunft 2 und eine diese bedienende Bedienperson 48. Die Bedienperson 48 greift mit einer Hand 50 an den Umrandungsmitteln 22, genauer an deren hinteren Ende an und vollführt eine Schwenkbewegung 38 der Box 4 und der in der Einzugsstellung befindlichen Umrandungsmittel 22. An einer vorderen Seite der Haltemittel 22 sind zwei Räder 32a, 32b mit einer gemeinsamen Radachse 52 angeordnet. In der gezeigten Lage bzw. Stellung ist die Tierunterkunft 2 über die zwei Räder 32a, 32b in die Rollrichtung 40 bzw. gegen die Rollrichtung 40 verfahrbar. Die Umrandungsmittel 22 sind fest verbunden mit einem Führungsring 64, der entlang der Führungsschiene 20 bewegbar ist, und auf diese Weise entlang der Box 4 geführt und mit dieser verbunden. In der gezeigten Einzugsstellung ist die Führungsöse 64 an einem hinteren Ende der Führungsschiene 20 angeordnet; in der (hier nicht gezeigten) Auszugsstellung befindet sie sich am vorderen, der Zugangsöffnung 58 zugeordneten Ende der Führungsschiene 20.

Fig. 5 zeigt, dass das Gewicht der zaun- bzw. gatterartigen Umrandungsmittel 22 und der aus einem Kunststoffmaterial gefertigten Box 4 derart gewählt ist, dass die gesamte Tierunterkunft 2 von der Bedienperson 48 angehoben und mit der Hand 50 gehalten werden kann. Durch Beabstandung der Box 4 vom Boden 14 wird der Innenraum der Box 4 freigegeben, um dort liegendes Heu 54 zu tauschen und/oder ein in der Box 4 befindliches Kalb 56 zu fassen und beispielsweise in einen Stall oder eine andere Tierunterkunft (nicht gezeigt) zu überführen. Zum Reinigen das Bodens 14 kann die igluartige Kälberumhausung bei eingefahrener Umrandung, ohne das Kalb aus dem Iglu entfernen zu müssen, entsprechend vor- und zurückgeschoben werden. Hierzu trägt auch mit bei, dass der Umrandungsteil über Räder, welche am äußeren Ende mit demselben verbunden sind, leicht vor- oder zurückgeschoben werden kann, so dass das Kalb in die igluhaltige Umhausung, ohne irgendwelchen zusätzlichen Aufwand, zurückgedrängt werden kann. Insoweit besteht auch die Möglichkeit, die das Kalb umfassende Umrandung mit diesem vor- oder zurückzuschieben. Die angesprochene gemeinsame Radachse 52 kann Teil der Umrandung sein; es besteht aber auch die Möglichkeit, diese Radachse 52 als separaten Teil für alle jeweiligen Operationen der Umrandung dieser zuzufügen. Beim Großreinemachen ist es jederzeit möglich, die Hütte (Kälberiglu) inklusive Umrandung nach vorne zu kippen. Beide an der igluartigen Umhausung angebrachten Führungsschienen verleihen dem Ganzen eine zusätzliche Stabilität. Das Kalb kann beispielsweise zum Saubermachen des Iglubodens oder aus hygienischen Gründen, beispielsweise bei Durchfall, bei zusammengeschobener Umrandung mit dem Iglu zusammen nach vorne oder hinten bewegt werden, was über einen entsprechenden Handgriff an der Hütten-Rückwand erleichtert wird.

Üblicherweise kann das Kalb 56 die Box 4 über eine Zugangsöffnung 58 verlassen bzw. betreten, insbesondere im in der Fig. 1 gezeigten Auszugsstellung der Umrandungsmittel 22. An der der Zugangsöffnung 58 zugeordneten Seite der Umrandungsmittel 22 ist ein Haltering 60 für einen Futtereimer vorgesehen, der in der gezeigten Einzugsstellung von dem Kalb 56 durch die Zugangsöffnung 58 hindurch zugänglich ist. Auch in der Auszugsstellung der Umrandungsmittel 22 ist ein in den Haltering 60 eingesetzter Futtereimer aus dem durch die Umrandungsmittel 22 und die Box 4 ausgebildeten Auslauf für das Kalb 56 weiter zugänglich. Die Box 4 kann, wie gezeigt, igluartig ausgebildet sein. Es gibt jedoch keinerlei Einschränkungen hinsichtlich der Form der Box 4 und der Umrandungsmittel 22.

## Patentansprüche

1. Tierunterkunft (2), insbesondere Kälberiglu für ein Kalb (56), umfassend:
- eine auf einen Boden (14) aufstellbare, Decken- und Wandteile (6, 8) und zumindest eine Zugangsöffnung (58) aufweisende Box (4); und
- in eine Auszugsrichtung (30) und in eine Einzugsrichtung (36) zwischen einer Auszugsstellung und einer Einzugsstellung bewegbare, in der Auszugsstellung einen an die Zugangsöffnung (58) angrenzenden Auslauf definierende Umrandungsmittel (22);
- wobei an der Box (4) zumindest eine im Wesentlichen parallel zur Auszugs- bzw. Einzugsrichtung (30, 36) gerichtete Führungsschiene (20) für die Umrandungsmittel (22) vorgesehen ist,
- **dadurch gekennzeichnet, dass** an dem in der Auszugsstellung von der Box (4) beabstandeten Ende der Umrandungsmittel (22) mindestens ein um eine Radachse (52) drehbares Rad (32a, 32b) derart angeordnet ist, dass die Tierunterkunft (2) sowohl in der Auszugsstellung als auch in der Einzugsstellung um die Radachse (52) kippbar und entlang einer Rollrichtung (40) verfahrbar ist.

2. Tierunterkunft nach Anspruch 1, **dadurch gekennzeichnet, dass** zumindest zwei Räder (32a, 32b) an einer gemeinsamen Radachse (52) angeordnet sind.

3. Tierunterkunft nach Anspruch 1 oder 2, **dadurch gekennzeichnet, dass** die Radachse (52) Teil der Umrandungsmittel (22) ist.

4. Tierunterkunft nach einem der vorhergehenden Ansprüche, **dadurch gekennzeichnet, dass** die zumindest eine Führungsschiene (20) an zumindest einem Seitenwandteil (8) der Box (4) angeordnet ist.

5. Tierunterkunft nach einem der vorhergehenden Ansprüche, **dadurch gekennzeichnet, dass** die Führungsmittel als Kulissenführung ausgebildet sind.

6. Tierunterkunft nach einem der vorhergehenden Ansprüche, **dadurch gekennzeichnet, dass** entlang der jeweiligen Führungsschiene (20) zumindest ein bodenseitiges Abschlusselement (26) der Umrandungsmittel (22) geführt ist.

7. Tierunterkunft nach einem der vorhergehenden Ansprüche, **dadurch gekennzeichnet, dass** das zumindest eine Rad (32a, 32b) im Wesentlichen fluchtend mit der Führungsschiene (20) und/oder einem bodenseitigen Abschlusselement (26) der Umrandungsmittel (22) angeordnet ist.

8. Tierunterkunft nach einem der vorhergehenden Ansprüche, **dadurch gekennzeichnet, dass** an der Box (4) und/oder an der zumindest einen mit der Box (4) verbundenen Führungsschiene (20) zumindest eine von einem bodenseitigen Abschlusselement (26) der Umrandungsmittel (22) durchgreifbare und/oder mit diesem verbindbare Öse (34a, 34b, 64) angeordnet ist.

9. Tierunterkunft nach einem der vorhergehenden Ansprüche, **dadurch gekennzeichnet, dass** die Umrandungsmittel (22) zaun- und/oder käfigartig ausgebildet sind.

10. Tierunterkunft nach einem der vorhergehenden Ansprüche, **dadurch gekennzeichnet, dass** die Umrandungsmittel (22) U-förmig ausgebildet sind zur Umrandung eines rechteckförmigen Auslaufes.

## Claims

1. An animal housing (2), in particular a calf house for a calf (56), comprising:
- a box (4) that can be positioned on a base (14) and that has cover and wall sections (6, 8) and at least one access opening (58);
and
- edging means (22) that can be moved in a drawn out direction (30) and in a drawn in direction (36) between a drawn out position and a drawn in position, in the drawn out position defining an outlet adjacent to the access opening (58);
- at least one guide rail (20) for the edging means (22) being provided on the box (4) aligned substantially parallel to the drawn out and drawn in direction (30, 36),
- **characterised in that** at least one wheel (32a, 32b) that can be rotated about a wheel axle (52) is arranged on the end of the edging means (22) spaced apart from the box (4) in the drawn out position such that the animal housing (2) can be tilted about the wheel axle (52) and can be moved along a rolling direction (40) both in the drawn out position and in the drawn in position.

2. The animal housing according to Claim 1, **characterised in that** at least two wheels (32a, 32b) are arranged on a common wheel axle (52).

3. The animal housing according to Claim 1 or 2, **characterised in that** the wheel axle (52) is part of the edging means (22).

4. The animal housing according to any of the preceding claims, **characterised in that** the at least one guide rail (20) is arranged on at least one side wall section (8) of the box (4).

5. The animal housing according to any of the preceding claims, **characterised in that** the guide means is in the form of a sliding block guide.

6. The animal housing according to any of the preceding claims, **characterised in that** at least one base-side terminating element (26) of the edging means (22) is conveyed along the respective guide rail (20).

7. The animal housing according to any of the preceding claims, **characterised in that** the at least one wheel (32a, 32b) is arranged substantially flush with the guide rail (20) and/or a base-side terminating element (26) of the edging means (22).

8. The animal housing according to any of the preceding claims, **characterised in that** at least one eye (34a, 34b, 64) through which a base-side terminating element (26) of the edging means (22) can pass and/or which can be connected to the latter is arranged on the at least one guide rail (20) connected to the box (4).

9. The animal housing according to any of the preceding claims, **characterised in that** the edging means (22) are formed like a fence and/or cage.

10. The animal housing according to any of the preceding claims, **characterised in that** the edging means (22) are formed in a U-shape in order to border a rectangular outlet.

## Revendications

1. Abri (2) pour animal, notamment igloo pour un veau (56), comprenant :
- un box (4) pouvant être mis sur un sol (14) et ayant des parties (6, 8) de toit et de paroi et au moins une ouverture (58) d'accès ; et
- des moyens (22) de bordure mobiles dans un sens (30) de sortie et dans un sens (36) de rentrée entre une position sortie et une position rentrée et définissant une sortie voisine de l'ouverture (58) d'accès dans la position sortie ;
- dans lequel il est prévu sur le box (4) au moins un rail (20) de guidage des moyens (22) de bordure dirigé sensiblement parallèlement à la direction (30, 36) de sortie ou de rentrée,
- **caractérisé en ce qu'**à l'extrémité des moyens (22) de bordure, à distance du box (4) dans la position sortie, est montée au moins une roue (32a, 32b) tournant autour d'un axe (52), de manière à ce que l'abri (2) pour animal puisse basculer à la fois dans la position sortie et dans la position rentrée autour de l'axe (52) de la roue et puisse être déplacé le long d'une direction (40) de roulement.

2. Abri pour animal suivant la revendication 1, **caractérisé en ce qu'**au moins deux roues (32a, 32b) sont montées sur un axe (52) commun.

3. Abri pour animal suivant la revendication 1 ou 2, **caractérisé en ce que** l'axe (52) de roue fait partie des moyens (22) de bordure.

4. Abri pour animal suivant l'une des revendications précédentes, **caractérisé en ce que** le au moins un rail (20) de guidage est monté sur au moins une partie (8) de paroi latérale du box (4).

5. Abri pour animal suivant l'une des revendications précédentes, **caractérisé en ce que** les moyens de guidage sont constitués sous la forme d'un guidage à coulisse.

6. Abri pour animal suivant l'une des revendications précédentes, **caractérisé en ce qu'**au moins un élément (26) de fermeture du côté du sol des moyens (22) de bordure est guidé le long du rail (20) du guidage respectif.

7. Abri pour animal suivant l'une des revendications précédentes, **caractérisé en ce que** la au moins une roue (32a, 32b) est montée sensiblement à affleurement avec le rail (20) de guidage et/ou avec un élément (26) de fermeture du côté du sol des moyens (22) de bordure.

8. Abri pour animal suivant l'une des revendications précédentes, **caractérisé en ce que**, sur le box (4) et/ou sur le au moins un rail (20) de guidage relié au box (4), est monté au moins un oeillet (34a, 34b, 64) pouvant être accroché par un élément (26) de fermeture du côté du sol des moyens (22) de bordure et/ou pouvant y être relié.

9. Abri pour animal suivant l'une des revendications précédentes, **caractérisé en ce que** les moyens (22) de bordure sont constitués sous la forme d'une clôture et/ou d'une cage.

10. labri pour animal suivant l'une des revendications précédentes, **caractérisé en ce que** les moyens (22) de bordure sont en forme de U pour entourer une sortie de forme rectangulaire.
